# EUROPÄISCHE PATENTANMELDUNG

(11) **EP 4 331 804 A1**
(43) Veröffentlichungstag der Anmeldung: **06.03.2024**
(21) Anmeldenummer: 23190850.0
(22) Anmeldetag: 10.08.2023
(51) Int. Cl.: B29C 45/00, B65D 65/46

(54) **VERFAHREN ZUM HERSTELLEN EINES FASERN UMFASSENDEN BEHÄLTERS UND VORRICHTUNG ZUM AUSFÜHREN DES VERFAHRENS**

(30) Priorität: 25.08.2022 DE 102022121489
(71) Anmelder: Krones AG, 93073 Neutraubling (DE)
(72) Erfinder: LAPPE, Ulrich, 93073 Neutraubling (DE); ZACHARIAS, Joerg, 93073 Neutraubling (DE); FREESE, Yvette, 93073 Neutraubling (DE); HIPPEL, Andreas, 93073 Neutraubling (DE)
(74) Vertreter: Grünecker Patent- und Rechtsanwälte PartG mbB

(57) **Zusammenfassung**

Die Erfindung betrifft ein Verfahren zum Herstellen eines Fasern umfassenden Behälters (10, 11, 20, 29), wobei das Verfahren ein Herstellen von mindestens einem Teil (1, 12, 21, 22, 30, 36, 39, 42, 45) des Behälters mittels eines Spritzgussverfahrens mit einer faserhaltigen, fluiden Masse umfasst. Weiter betrifft die Erfindung eine Vorrichtung zum Ausführen des Verfahrens, wobei die Vorrichtung eine Spritzgussvorrichtung zum Herstellen des mindestens einen Teils des Behälters mittels eines Spritzgussverfahrens mit einer faserhaltigen, fluiden Masse umfasst.

## Beschreibung

Die Erfindung betrifft ein Verfahren zum Herstellen eines Fasern umfassenden Behälters und eine Vorrichtung zum Ausführen des Verfahrens gemäß den unabhängigen Ansprüchen.

### Stand der Technik

Für eine Verwendung von mit Produkt gefüllten Behältern in Alltag ist eine Wiederverschließbarkeit wünschenswert. Das trifft beispielsweise auf größere Behälter zu, die einen Füllinhalt von mehr als 0,2 Liter eines Getränks aufweisen und im Allgemeinen nicht in einem Zug geleert werden und zu einer weiteren Verwendung, einem Transport und/oder einer Lagerung in sicherer, stabiler und einfacher Weise wiederverschließbar sein sollen.

Für einen Fasern umfassenden Behälter sind weder geeignete Gewinde noch geeignete Verschlüsse bekannt, die jeweils auch Fasern, bekannt.

### Aufgabe

Die Aufgabe der Erfindung ist es, ein Verfahren und eine Vorrichtung zur Verfügung zu stellen, die ein Herstellen eines Fasern umfassenden Behälters ermöglichen, der eine ausreichende Festigkeit und Stabilität aufweist.

### Lösung

Die Aufgabe wird gelöst durch das Verfahren und die Vorrichtung gemäß den unabhängigen Ansprüchen. Weitere Ausführungsformen sind in den Unteransprüchen offenbart.

Das erfindungsgemäße Verfahren zum Herstellen eines Fasern, umfassenden Behälters, umfasst ein Herstellen von mindestens einem Teil des Behälters mittels eines Spritzgussverfahrens mit einer faserhaltigen, fluiden Masse.

Die Fasern in derfaserhaltigen, fluiden Masse können beispielsweise natürliche Fasern und/oder pflanzliche Bestandteile sein oder diese umfassen. Die faserhaltige, fluide Masse kann Pulpe sein oder umfassen. Der fluide Anteil der Masse kann Wasser umfassen.

Beispielsweise kann die faserhaltige, fluide Masse Additive zum Beeinflussen von chemischen und/oder physikalischen Eigenschaften der Fasern umfassen.

Mittels des Spritzgussverfahrens kann in einem Vorratsbehälter bereitgestellte faserhaltige, fluide Masse mittels einer Förder- und Dosiereinrichtung in ein Spritzgusswerkzeug unter Druck eingespritzt werden. Eine Kavität des Spritzgusswerkzeugs kann dabei die Form und die Oberflächenstruktur des herzustellenden mindestens einen Teils des Behälters bestimmen.

Das Spritzgusswerkzeug kann ein poröses Material umfassen, sodass Fluid der faserhaltigen, fluiden Masse abfließen und/oder austreten kann. Beispielsweise kann eine zusätzliche Trocknung des mindestens einen Teils des Behälters in dem Spritzgusswerkzeug durch ein Erwärmen des Spritzgusswerkzeugs vorgesehen sein.

Die faserhaltige, fluide Masse kann biologisch abbaubare Fasern umfassen, beispielsweise Zellulosefasern oder Holzfasern.

Die faserhaltige, fluide Masse kann Additive umfassen, beispielsweise Stärke, Kreide, Zitrusfasern, Lignin und/oder Wachs, wie beispielsweise Bienenwachs oder Carnaubawachs. Stärke, Kreide, Zitrusfasern, Lignin können beim anschließenden Trocknen des mindestens einen Teils des Behälters aushärten. Das Trocknen kann bei Umgebungstemperatur erfolgen oder durch Erwärmen eines Spritzgusswerkzeugs, in dem das mindestens eine Teil des Behälters beim Spritzgussverfahren hergestellt werden kann.

Das Verfahren kann weiter ein Beschichten des mindestens einen Teils nach dem Herstellen umfassen, beispielsweise mit Wachs, wie beispielsweise Bienenwachs oder Carnaubawachs. Eine Beschichtung kann eine Permeation von Gas, eine Feuchtigkeitsaufnahme und/oder eine Lichtdurchlässigkeit minimieren.

Das Verfahren kann weiter ein Anordnen des mindestens einen Teils an einem Grundkörper des Behälters umfassen.

Der Grundkörper des Behälters kann Behälterteile umfassen, die zusammen mit dem mindestens einen Teil des Behälters einen Behälter bilden. Ist beispielsweise das mindestens eine Teil ein Kopfstück, so kann der Grundkörper des Behälters einen Boden, ein Seitenteil und Schulterteil umfassen. Das Kopfstück kann an dem Schulterteil angeordnet werden.

Das Anordnen kann ein Ankleben des mindestens einen hergestellten Teils am Grundkörper umfassen. Das mindestens eine Teil kann zunächst mittels des Spritzgussverfahrens aus der faserhaltigen, fluiden Masse hergestellt worden sein und anschließend kann das hergestellte Teil am Grundkörper angeklebt werden.

Das Anordnen kann ein Anspritzen des mindestens einen Teils an dem Grundkörper mittels des Spritzgussverfahrens zum Herstellen des mindestens einen Teils umfassen. Die Herstellung des mindestens einen Teils kann somit mit dem Anordnen an dem Grundkörper kombiniert werden. Der Grundkörper kann zunächst zur Verfügung stehen und das mindestens eine Teil kann dann mittels des Spritzgussverfahrens aus der faserhaltigen, fluiden Masse angespritzt werden, wodurch eine Verbindung des in Herstellung befindlichen mindestens einen Teils mit dem Grundkörper und gleichzeitig die Herstellung des mindestens einen Teils erfolgen kann.

Das mindestens eine Teil kann mindestens eines umfassen von einem Deckel; Gewinde; Tragring; Gewindestrang; einer Kreisringfläche; einem Schulterbereich; einem Kopfstück; einem Gewinde und einem Tragring; einem Gewinde und einem Schulterbereich; einem Tragring und einem Schulterbereich; einen Tragring, ein Gewinde und einen Schulterbereich; einen Behälter.

Eine Kavität eines Spritzgusswerkzeugs, das beispielsweise für das Spritzgussverfahren verwendet werden kann, kann dabei die Form und die Oberflächenstruktur des herzustellenden mindestens einen Teils des Behälters bestimmen, also beispielsweise die Form und die Oberflächenstruktur eines Deckels, die Form und die Oberflächenstruktur eines Gewindes, die Form und die Oberflächenstruktur eines Tragrings oder die Form und die Oberflächenstruktur eines Schulterbereichs, usw..

Der Deckel kann eine Höhe umfassen, wobei beispielsweise der Deckel einen innenliegenden Layer umfasst. Der Layer kann Sauerstofffänger umfassen.

Für Deckel können unterschiedlich breite Gewindestränge und/oder Höhen vorgesehen sein.

Das Verfahren kann weiter ein Bereitstellen eines Grundkörpers des Behälters umfassen.

Der Grundkörper kann mittels eines Spritzgussverfahrens mit einer faserhaltigen, fluiden Masse zuvor hergestellt worden sein, beispielsweise mittels des Spritzgussverfahrens, das zur Herstellung des mindestens einen Teil des Behälters verwendet wird. Oder der Grundkörper kann mittels eines anderen Verfahrens, das für die Verwendung einer faserhaltigen, fluiden Masse geeignet ist, zuvor hergestellt worden sein. Beispielsweise kann die gleiche faserhaltige, fluide Masse wie bei Spritzgussverfahren des mindestens einen Teils des Behälters oder eine faserhaltige, fluide Masse mit einer anderen Zusammensetzung verwendet werden.

Die faserhaltige, fluide Masse kann thermoplastische Eigenschaften aufweisen. Die faserhaltige, fluide Masse kann ein Grundmaterial, das ein einziges Material oder mehrere verschiedene Materialien umfassen kann, und ein Fluid, das eine einzige Fluidart oder mehrere Fluidarten umfassen kann, umfassen. Das Grundmaterial kann Fasern eines Ursprungs oder Fasern unterschiedlichen Ursprungs umfassen. Die Fasern können Primär- oder Sekundärfasern sein oder umfassen oder können Holzfasern oder Fasern von einjährigen Pflanzen sein und oder umfassen. Das Grundmaterial kann zudem Stärke, wie Mais-, Reis-, Weizen- und/oder Kartoffelstärke, umfassen. Das Grundmaterial kann zudem oder alternativ modifizierte Cellulose umfassen, wie beispielsweise CMC (Carboxymethylcellulose) und/oder HPMC (Hydroxypropylmethylcellulose). Das Grundmaterial kann zudem oder alternativ modifizierte Stärke umfassen, wie Stärkeether und/oder Stärkeester. Das Grundmaterial kann zudem oder alternativ ein oder mehrere Additive umfassen, wie Zitronensäure und/oder Lecithin.

Solch eine faserhaltige, fluide Masse, die thermoplastische Eigenschaften aufweisen kann, kann beispielsweise in einem Verfahren zur Herstellung eines Deckels mittels des Spritzgussverfahrens verwendet werden. Beispielsweise kann dieses Verfahren als ein Co-Extrusionsprozess ausgeführt werden.

Durch den Co-Extrusionsprozess können eine oder mehrere Zusatzschichten ausgebildet und beispielsweise Eigenschaften des Deckels erreicht werden. Beispielsweise kann die Zusatzschicht/können die Zusatzschichten als eine Barriere und/oder als eine Oberflächenveredlung dienen.

Im Co-Extrusionsprozess kann neben der ersten Schicht auch eine zweite Schicht Fasern umfassen. Die zweite Schicht kann zudem ein oder mehrere Biopolymere, wie beispielsweise Polylactid (PLA), Polyhydroxyalkanoat (PHA), Polybutylenadipat-terephthalat (PBAT), oder naturbasierte Materialien, wie beispielsweise Bienenwachs, Carnaubawachs, Casein und/oder Alginat, umfassen.

Das Grundmaterial kann als Granulat oder als Pulver oder als Paste vorliegen. Die Lagerung, der Transport und die Haltbarkeit können so optimiert sein. In einer ersten Ausführungsform kann das Grundmaterial einem Extruder zugegeben werden, beispielsweise kann es in dem Extruder aufgeschmolzen werden. In einer zweiten Ausführungsform können die Bestandteile des Grundmaterials, beispielsweise seine Einzelkomponenten, in einem Compounder zusammengeführt und dort vermischt werden. Danach kann jeweils das Spritzgussverfahren ausgeführt werden und beispielsweise die faserhaltige, fluide Masse einer Spritzgussform zugefördert werden. Die Spritzgussform kann zum Ausformen eines Deckels vorgesehen sein. Beispielsweise kann nach einer Kühlung die Spritzgussform geöffnet und der Deckel entnommen werden.

Der Deckel kann durch die Herstellung mittels des Spritzgussverfahrens frei formbar sein. Er kann eine gute Stabilität und beispielsweise eine gute Haptik aufweisen.

Die Fasern können auf diese Weise als Füllstoff eingesetzt werden. Es kann nicht erforderlich sein, dass die Fasern spezielle Anforderungen erfüllen, um eine Deckelherstellung zu ermöglichen.

Eine Vorrichtung zum Ausführen des Verfahrens, wie oben oder weiter unten beschrieben umfasst eine Spritzgussvorrichtung zum Herstellen des mindestens einen Teils des Behälters mittels eines Spritzgussverfahrens mit einer faserhaltigen, fluiden Masse.

Die Vorrichtung kann weiter mindestens einen Vorratsbehälter umfassen zum Bereitstellen von faserhaltiger, fluiden Masse. Mittels einer Förder- und Dosiereinrichtung der Vorrichtung kann diese Masse in ein Spritzgusswerkzeug unter Druck eingespritzt werden. Das Spritzgusswerkzeug kann von der Vorrichtung umfasst sein. Es können verschiedenartige Spritzgusswerkzeuge zur Verfügung stehen, um unterschiedliche geformte Arten des mindestens einen Teils des Behälters herstellen zu können. Eine Kavität des Spritzgusswerkzeugs kann dabei die Form und die Oberflächenstruktur des herzustellenden mindestens einen Teils des Behälters bestimmen. Das Spritzgusswerkzeug kann ein poröses Material umfassen, um ein Abfließen und/oder Austreten von Fluid der faserhaltigen, fluiden Masse nach Einspritzen der Masse in das Spritzgusswerkzeug zu ermöglichen. Die Vorrichtung kann weiter eine Heizvorrichtung des Spritzgusswerkzeugs umfassen für eine zusätzliche Trocknung des mindestens einen Teils des Behälters in dem Spritzgusswerkzeug durch ein Erwärmen des Spritzgusswerkzeugs mittels der Heizvorrichtung.

Die Vorrichtung kann weiter eine Beschichtungsvorrichtung zum Beschichten des mindestens einen Teils umfassen. Eine Beschichtung kann mit Wachs, wie beispielsweise Bienenachs oder Carnaubawachs, erfolgen.

Die Vorrichtung kann weiter eine Anordenvorrichtung zum Anordnen des mindestens einen Teils an dem Grundkörper des Behälters umfassen. Die Anordenvorrichtung kann für ein Ankleben des mindestens einen Teils am Grundkörper oder für ein Anspritzen mittels des Spritzgussverfahrens ausgebildet sein.

Die Vorrichtung kann weiter eine Einbringvorrichtung zum Einbringen eines innenliegenden Layers in den Deckel umfassen.

Die Vorrichtung kann weiter eine Bereitstellungsvorrichtung zum Bereitstellen eines Grundkörpers des Behälters umfassen. Die Bereitstellungsvorrichtung kann ausgebildet sein, einen bereits hergestellten Grundkörper bereitzustellen. Oder die Bereitstellungsvorrichtung kann ausgebildet sein, den Grundkörper bereitzustellen durch Herstellung mittels eines Spritzgussverfahrens mit einer faserhaltigen, fluiden Masse herzustellen, beispielsweise mittels des Spritzgussverfahrens, das zur Herstellung des mindestens einen Teil des Behälters verwendet wird, oder mittels eines anderen Verfahrens, das für die Verwendung einerfaserhaltigen, fluiden Masse geeignet ist, herzustellen. Beispielsweise kann die gleiche faserhaltige, fluide Masse wie bei Spritzgussverfahren des mindestens einen Teils des Behälters oder eine faserhaltige, fluide Masse mit einer anderen Zusammensetzung verwendet werden.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 eine Schnittdarstellung von einem Kopfstück, das an einem Grundkörper des Behälters angeordnet ist,
Figur 2 eine Schnittdarstellung von einem Tragring, der an einem Grundkörper des Behälters angeordnet ist,
Figur 3 eine Schnittdarstellung von einem Gewinde, das an einem Grundkörper des Behälters angeordnet ist,
Figur 4 eine Schnittdarstellung von einer Kreisringfläche, die an einem Grundkörper des Behälters angeordnet ist,
Figur 5 eine erste Ausführungsform eines Deckels,
Figur 6 eine zweite Ausführungsform eines Deckels,
Figur 7 eine dritte Ausführungsform eines Deckels und
Figur 8 eine vierte Ausführungsform eines Deckels.

### Ausführliche Figurenbeschreibung

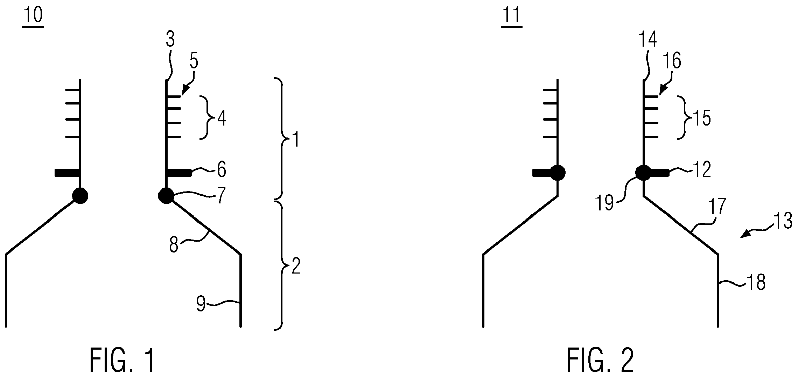

Die Figur 1 zeigt eine Schnittdarstellung von eines Kopfstücks 1, das an einem Grundkörper 2 des Behälters 10 angeordnet ist. Das Kopfstück 1 ist hierbei der mindestens eine Teil des Behälters 10, der mittels eines erfindungsgemäßen Spritzgussverfahrens mit einer faserhaltigen, fluiden Masse hergestellt wurde.

Das Kopfstück 1 umfasst ein Halsteil 3, ein Gewinde 4 und einen Tragring 6. Zur Herstellung des Gewindes 4 kann ein Gewindestrang 5 zusammen mit dem Halsteil 3 hergestellt werden oder der Gewindestrang 5 kann auf dem Halsteil 3 nach dessen Herstellung angeordnet werden.

Der Grundkörper 2 des Behälters 10 umfasst ein Schulterteil 8, ein Seitenteil 9 und einen nicht dargestellten Boden. Der Grundkörper 2 kann mittels eines Spritzgussverfahrens mit einer faserhaltigen, fluiden Masse zuvor hergestellt worden sein, beispielsweise mittels des Spritzgussverfahrens, das zur Herstellung des Kopfstücks 1 verwendet wird. Oder der Grundkörper 2 kann mittels eines anderen Verfahrens, das für die Verwendung einer faserhaltigen, fluiden Masse geeignet ist, zuvor hergestellt worden sein. Beispielsweise kann die gleiche faserhaltige, fluide Masse, die für die Herstellung des Kopfstücks 1 verwendet wurde, oder eine faserhaltige, fluide Masse mit einer anderen Zusammensetzung für den Grundkörper 2 verwendet werden.

Zur Ausbildung des Behälters 10 ist der Kopfstück 1 mit dem Grundkörper 2 mittels einer Verbindung 7 verbunden. Die Verbindung 7 kann durch ein Anordnen des Kopfstück 1 an dem Schulterteil 8 mittels Ankleben erfolgen oder das Kopfteil 1 kann am Schulterteil 8 mittels des Spritzgussverfahrens angespritzt werden.

Die Figur 2 zeigt eine Schnittdarstellung von einem Tragring 12, der an einem Grundkörper 13 des Behälters 11 angeordnet ist. Der Tragring 12 ist hierbei der mindestens eine Teil des Behälters 11, der mittels eines erfindungsgemäßen Spritzgussverfahrens mit einer faserhaltigen, fluiden Masse hergestellt wurde.

Der Grundkörper 13 des Behälters 11 umfasst ein Halsteil 14, ein Gewinde 15 mit einem Gewindestrang 16, ein Schulterteil 17, ein Seitenteil 18 und einen nicht dargestellten Boden. Der Grundkörper 13 kann hergestellt worden sein, wie es bereits hinsichtlich der Figur 1 beschrieben wurde.

Zur Ausbildung des Behälters 11 ist der Tragring 12 mit dem Grundkörper 13 mittels einer Verbindung 19 verbunden. Die Verbindung 19 kann durch ein Anordnen des Tragrings 12 an dem Halsteil 14 mittels Ankleben erfolgen oder der Tragring 12 kann am Halsteil 14 mittels des Spritzgussverfahrens angespritzt werden.

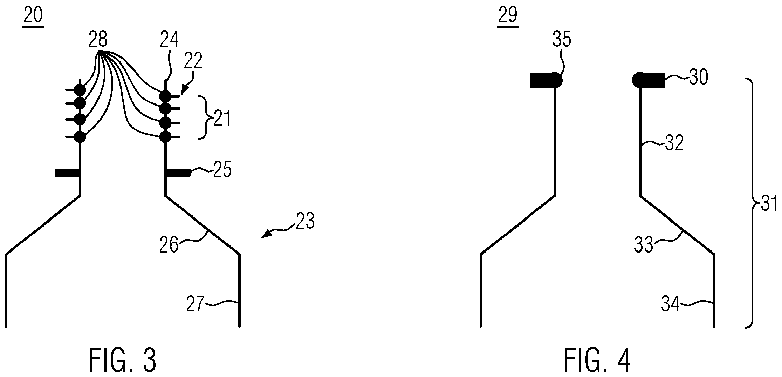

Die Figur 3 zeigt eine Schnittdarstellung von einem Gewinde 21 mit Gewindestrang 22, das an einem Grundkörper 23 des Behälters 20 angeordnet ist. Das Gewinde 21 mit dem Gewindestrang 22, der spiralig um ein Halsteil 24 des Grundkörpers 23 umläuft, ist hierbei der mindestens eine Teil des Behälters 20, der mittels eines erfindungsgemäßen Spritzgussverfahrens mit einer faserhaltigen, fluiden Masse hergestellt wurde.

Der Grundkörper 23 des Behälters 20 umfasst ein Halsteil 24, einen Tragring 25, ein Schulterteil 26, ein Seitenteil 27 und einen nicht dargestellten Boden. Der Grundkörper 23 kann hergestellt worden sein, wie es bereits hinsichtlich der Figur 1 beschrieben wurde.

Zur Ausbildung des Behälters 20 ist der Gewindestrang 22 des Gewindes 21 spiralig mit dem Grundkörper 23 mittels einer Verbindung 28 verbunden. Die Verbindung 28 kann durch ein Anordnen des Gewindestrangs 22 an dem Halsteil 24 mittels Ankleben erfolgen oder der Gewindestrang 22 kann am Halsteil 24 mittels des Spritzgussverfahrens angespritzt werden.

Die Figur 4 zeigt eine Schnittdarstellung von einer Kreisringfläche 30, die an einem Grundkörper 31 des Behälters 29 angeordnet ist. Die Kreisringfläche 30 ist hierbei der mindestens eine Teil des Behälters 29, der mittels eines erfindungsgemäßen Spritzgussverfahrens mit einer faserhaltigen, fluiden Masse hergestellt wurde.

Der Grundkörper 31 des Behälters 29 umfasst ein Halsteil 32, ein Schulterteil 33, ein Seitenteil 34 und einen nicht dargestellten Boden. Der Grundkörper 31 kann hergestellt worden sein, wie es bereits hinsichtlich der Figur 1 beschrieben wurde.

Zur Ausbildung des Behälters 29 ist die Kreisringfläche 30 mit dem Grundkörper 31 mittels einer Verbindung 35 verbunden. Die Verbindung 35 kann durch ein Anordnen der Kreisringfläche 30 an dem Halsteil 32 mittels Ankleben erfolgen oder die Kreisringfläche 30 kann am Halsteil 32 mittels des Spritzgussverfahrens angespritzt werden. Die Kreisringfläche 30 kann für das Aufbringen eines Siegels vorgesehen werden.

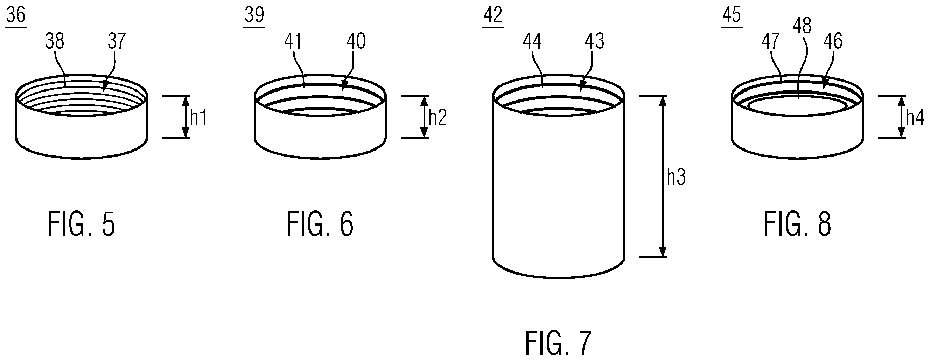

Die Figur 5 zeigt eine erste Ausführungsform eines Deckels 36, der ein innenliegendes Gewinde 37 umfasst. Der Deckel 36 weist eine Höhe h1 auf. Der Gewindestrang 38 weist eine erste Breite auf.

Die Figur 6 zeigt eine zweite Ausführungsform eines Deckels 39, der ein innenliegendes Gewinde 40 umfasst. Der Deckel 39 weist eine Höhe h2 auf, die gleich der Höhe h1 des Deckels 36 der ersten Ausführungsform sein kann. Der Gewindestrang 41 weist eine zweite Breite auf, die größer als die erste Breite des Gewindestrangs 38 der ersten Ausführungsform sein kann.

Die Figur 7 zeigt eine dritte Ausführungsform eines Deckels 42, der ein innenliegendes Gewinde 43 umfasst. Der Deckel 42 weist eine Höhe h3 auf, die größer als die Höhen h1 bzw. h2 der ersten bzw. zweiten Ausführungsform sein kann. Der Gewindestrang 44 weist eine dritte Breite auf, die gleich groß wie die zweite Breite des Gewindestrangs 41 der zweiten Ausführungsform sein kann.

Figur 8 eine vierte Ausführungsform eines Deckels 45, der ein innenliegendes Gewinde 46 umfasst. Der Deckel 45 weist eine Höhe h4 auf, die kleiner als die Höhen h3 der dritten Ausführungsform sein kann. Der Gewindestrang 47 weist eine vierte Breite auf, die gleich groß wie die dritte Breite des Gewindestrangs 44 der dritten Ausführungsform sein kann. Zudem umfasst der Deckel 45 einen innenliegenden Layer 48, der beispielsweise einen Sauerstofffänger umfassen kann.

## Patentansprüche

1. Verfahren zum Herstellen eines Fasern umfassenden Behälters (10, 11, 20, 29), wobei das Verfahren umfasst:
Herstellen von mindestens einem Teil (1, 12, 21, 22, 30, 36, 39, 42, 45) des Behälters (10, 11, 20, 29) mittels eines Spritzgussverfahrens mit einer faserhaltigen, fluiden Masse.

2. Das Verfahren nach Anspruch 1, wobei die faserhaltige, fluide Masse biologisch abbaubare Fasern umfasst, beispielsweise Zellulosefasern oder Holzfasern
und/oder wobei die faserhaltige, fluide Masse Additive umfasst, beispielsweise Stärke, Kreide, Zitrusfasern, Lignin und/oder Wachs, wie beispielsweise Bienenwachs oder Carnaubawachs.

3. Das Verfahren nach Anspruch 1 oder 2, weiter umfassend Beschichten des mindestens einen Teils (1, 12, 21, 22, 30, 36, 39, 42, 45) nach dem Herstellen, beispielsweise mit Wachs, wie beispielsweise Bienenwachs oder Carnaubawachs.

4. Das Verfahren nach einem der Ansprüche 1 bis 3, weiter umfassend Anordnen des mindestens einen Teils (1, 12, 21, 22, 30, 36, 39, 42, 45) an einem Grundkörper (2, 13, 23, 31) des Behälters (10, 11, 20, 29), wobei beispielsweise
das Anordnen ein Ankleben des hergestellten mindestens einen Teils (1, 12, 21, 22, 30, 36, 39, 42, 45) am Grundkörper (2, 13, 23, 31)
oder wobei das Anordnen ein Anspritzen des mindestens einen Teils (1, 12, 21, 22, 30, 36, 39, 42, 45) an dem Grundkörper (2, 13, 23, 31) mittels des Spritzgussverfahrens zum Herstellen des mindestens einen Teils (1, 12, 21, 22, 30, 36, 39, 42, 45) umfasst.

5. Das Verfahren nach einem der Ansprüche 1 und 3 bis 4, wobei die faserhaltige, fluide Masse thermoplastische Eigenschaften aufweist, wobei beispielsweise die faserhaltige, fluide Masse ein Grundmaterial, das beispielsweise ein einziges Material oder mehrere verschiedene Materialien umfasst, und ein Fluid, das beispielsweise eine einzige Fluidart oder mehrere Fluidarten umfasst, umfasst, wobei beispielsweise das Grundmaterial Fasern eines Ursprungs oder Fasern unterschiedlichen Ursprungs umfasst, beispielsweise umfassen die Fasern Primär- oder Sekundärfasern oder Holzfasern oder Fasern von einjährigen Pflanzen, wobei beispielsweise das Grundmaterial zudem Stärke, wie Mais-, Reis-, Weizen- und/oder Kartoffelstärke, umfasst, wobei beispielsweise das Grundmaterial zudem oder alternativ modifizierte Cellulose umfasst, wie beispielsweise CMC, Carboxymethylcellulose, und/oder HPMC, Hydroxypropylmethylcellulose, wobei beispielsweise das Grundmaterial zudem oder alternativ modifizierte Stärke umfasst, wie beispielsweise Stärkeether und/oder Stärkeester, wobei beispielsweise das Grundmaterial zudem oder alternativ ein oder mehrere Additive umfasst, wie beispielsweise Zitronensäure und/oder Lecithin.

6. Das Verfahren nach Anspruch 5, wobei das Grundmaterial vor Verwendung im Spritzgussverfahren als Granulat oder als Pulver oder als Paste vorliegt,
wobei beispielsweise
das Grundmaterial einem Extruder zugegeben wird und beispielsweise in dem Extruder aufgeschmolzen wird
oder wobei das Grundmaterial, beispielsweise seine Einzelkomponenten, in einem Compounder zusammengeführt und dort vermischt wird.

7. Das Verfahren nach Anspruch 5 oder 6, wobei ein Deckel mittels des Spritzgussverfahrens hergestellt wird,, wobei beispielsweise ein Co-Extrusionsprozess ausgeführt wird, wobei beispielsweise durch den Co-Extrusionsprozess eine oder mehrere Zusatzschichten ausgebildet werden, wobei beispielsweise Eigenschaften des Deckels erreicht werden, wobei beispielsweise die Zusatzschicht/die Zusatzschichten als eine Barriere und/oder als eine Oberflächenveredlung dienen, wobei beispielsweise im Co-Extrusionsprozess neben einer ersten Zusatzschicht auch eine zweite Zusatzschicht Fasern umfasst, wobei beispielsweise die zweite Zusatzschicht zudem ein oder mehrere Biopolymere umfasst, wie beispielsweise Polylactid, PLA, Polyhydroxyalkanoat, PHA, oder Polybutylenadipat-terephthalat, PBAT, wobei beispielsweise die zweite Zusatzschicht zudem oder alternativ naturbasierte Materialien umfasst, wie beispielsweise Bienenwachs, Carnaubawachs, Casein und/oder Alginat.

8. Das Verfahren nach einem der Ansprüche 1 bis 7, wobei das mindestens eine Teil (1, 12, 21, 22, 30, 36, 39, 42, 45) mindestens eines umfasst von:
- einen Deckel (36, 39, 42, 45),
- ein Gewinde (21),
- einen Tragring (12),
- einen Gewindestrang (22),
- eine Kreisringfläche (30),
- einen Schulterbereich,
- ein Kopfstück (1),
- ein Gewinde und einen Tragring,
- ein Gewinde und einen Schulterbereich,
- einen Tragring und einen Schulterbereich,
- einen Tragring, ein Gewinde und einen Schulterbereich,
- einen Behälter.

9. Das Verfahren nach Anspruch 7 oder 8, wobei der Deckel (36, 39, 42, 45) eine Höhe (h1, h2, h3, h4) umfasst, wobei beispielsweise der Deckel (36, 39, 42, 45) (48) einen innenliegenden Layer umfasst.

10. Das Verfahren nach einem der Ansprüche 1 bis 9, weiter umfassend:
Bereitstellen eines Grundkörpers (2, 13, 23, 31) des Behälters (10, 11, 20, 29).

11. Vorrichtung zum Ausführen des Verfahrens nach einem der Ansprüche 1 bis 10, wobei die Vorrichtung umfasst:
- eine Spritzgussvorrichtung zum Herstellen des mindestens einen Teils (1, 12, 21, 22, 30, 36, 39, 42, 45) des Behälters (10, 11, 20, 29) mittels eines Spritzgussverfahrens mit einer faserhaltigen, fluiden Masse.

12. Die Vorrichtung nach Anspruch 11, weiter umfassend eine Beschichtungsvorrichtung zum Beschichten des mindestens einen Teils (1, 12, 21, 22, 30, 36, 39, 42, 45).

13. Die Vorrichtung nach Anspruch 11 oder 12, weiter umfassend eine Anordenvorrichtung zum Anordnen des mindestens einen Teils (1, 12, 21, 22, 30, 36, 39, 42, 45) an dem Grundkörper (2, 13, 23, 31) des Behälters (10, 11, 20, 29).

14. Die Vorrichtung nach einem der Ansprüche 11 bis 12, weiter umfassend eine Einbringvorrichtung zum Einbringen eines innenliegenden Layers (48) in den Deckel (36, 39, 42, 45).

15. Die Vorrichtung nach einem der Ansprüche 11 bis 14, weiter umfassend eine Bereitstellungsvorrichtung zum Bereitstellen eines Grundkörpers (2, 13, 23, 31) des Behälters (10, 11, 20, 29).
